# NEUE EUROPÄISCHE PATENTSCHRIFT

(11) **EP 0 681 689 B2**
(45) Veröffentlichungstag und Bekanntmachung des Hinweises auf die Entscheidung über den Einspruch: **10.05.2000**
(45) Hinweis auf die Patenterteilung: 06.08.1997
(21) Anmeldenummer: 94905043.9
(22) Anmeldetag: 12.01.1994
(51) Int. Cl.: G01L 3/10, G01L 5/16

(54) **ANORDNUNG FÜR DREHMOMENTMESSUNGEN AN KRAFTFAHRZEUGEN**
TORQUE MEASUREMENT ARRANGEMENT FOR MOTOR VEHICLES
AGENCEMENT PERMETTANT DE MESURER LE COUPLE D'AUTOMOBILES

(30) Priorität: 27.01.1993 DE 9301111 U
(43) Veröffentlichungstag der Anmeldung: 15.11.1995
(73) Patentinhaber: Lucas Industries Limited, London W1Y 4DJ (GB)
(72) Erfinder: JACHMANN, Detlef, D-56070 Koblenz (DE); WALDORF, Gregor, D-53547 Kasbach-Ohlenberg (DE)
(74) Vertreter: Goetz, Rupert, Dipl.-Ing.
(86) Internationale Anmeldenummer: EP9400077
(87) Internationale Veröffentlichungsnummer: WO9417380

(56) Entgegenhaltungen:
- DE-A- 2 828 538
- DE-A- 2 856 453
- DE-A- 4 133 418
- DE-C- 2 708 484
- DE-C- 3 715 472
- GB-A- 1 284 251
- US-A- 3 867 838
- US-A- 4 186 596
- US-A- 4 297 877
- US-A- 4 748 844
- SAE Veröffentlichung 750049 "A Triaxial Automotive Wheel Force and Moment Transducer" von R.S. Shoberg and B. Wallace, Seiten 1-25, Februar 1975

## Beschreibung

Die Erfindung betrifft eine Anordnung für Drehmomentmessungen an Kraftfahrzeugen. Solche Anordnungen werden vor allem bei der Erprobung von Radbremsen verwendet, um deren Bremsmoment im Fahrbetrieb eines Kraftfahrzeugs, und nicht nur auf dem Prüfstand, zu ermitteln.

Eine Anordnung der im Oberbegriff des Patentanspruchs 1 beschriebenen Gattung ist aus DE 28 28 538 A1 bekannt. Dort ist das Prüfrad aus zwei Felgenringen zusammengesetzt, die je ein Felgenhorn und, diesem axial gegenüberliegend, je einen nach innen ragenden Flansch aufweisen. Die beiden Felgenringe sind aus einem Sortiment unterschiedlicher Breite und Tiefe ausgewählt und mit ihren Flanschen aneinanderliegend gehalten, wobei diese Flansche andeutungsweise eine Radschüssel bilden. Gegen diese Radschüssel axial versetzt. radial innerhalb des axial äußeren Felgenrings, ist ein topfförmiger erster Adapter angeordnet, der einen axial und radial inneren Flansch zum Befestigen an einer Fahrzeugnabe, eine sich axial nach außen anschließende, zylindrische Wand und schließlich einen axial und radial äußeren Flansch aufweist. Mit diesem ist ein radial innerer erster Randbereich einer Meßnabe verschraubt, der die zylindrische Wand des ersten Adapters umschließt, auf ihr zentriert ist und die gleiche in axialer Richtung gemessene Breite hat wie diese zylindrische Wand. Die Meßnabe hat zwei in einem axialen Abstand voneinander angeordnete Speichenkreuze, die sich vom radial inneren ersten Randbereich zu einem radial äußeren zweiten Randbereich der Meßnabe erstrecken. An diesen ist ein ringförmiger zweiter Adapter seitlich, gegen die beiden Speichenkreuze der Meßnabe axial nach innen versetzt angeschraubt, wobei ein axial nach innen vorspringender zylindrischer Ansatz der Meßnabe den zweiten Adapter mittels einer an ihm ausgebildeten zylindrischen Innenwand zentriert hält. An einem radial äußeren, axial nach innen gewandten Randbereich des zweiten Adapters sind die radschüsselartig radial nach innen ragenden Flansche der beiden Felgenringe zentriert und festgeschraubt. Die eigentlichen Funktionsteile der Meßnabe, nämlich insbesondere deren Speichenkreuze, an denen sich Dehnungsmeßstreifen festkleben lassen, sind durch einen axial inneren und einen axial äußeren Spritzring vor Spritzwasser geschützt.

Der Erfindung liegt die Aufgabe zugrunde, eine Anordnung für Drehmomentmessungen an Kraftfahrzeugen derart weiterzubilden, daß sich mit ihr Versuchsergebnisse an Fahrzeugen gewinnen lassen, welche ohne weiteres auf gleiche Fahrzeuge mit unmittelbar an den Fahrzeugnaben befestigten Rädern übertragbar sind.

Die Aufgabe ist erfindungsgemäß mit den Merkmalen des Patentanspruchs 1 gelöst.

Mit dieser Anordnung wird erreicht, daß ein Fahrzeug, das Scheibenbremsen aufweist, an sämtlichen Rädern mit je einer Meßnabe be kannter Art ausgestattet werden kann, ohne daß sich die Spur oder die Lenkgeometrie, insbesondere der Lenkrollradius des Fahrzeugs ändern. Deshalb ist es auch möglich, zu Versuchszwecken an einem Fahrzeug nur eines der normalen Fahrzeugräder durch eine erfindungsgemäße Anordnung zu ersetzen, ohne daß sich die Fahreigenschaften ändern. Die bisher verwendeten, bewährten Meßnaben einschließlich ihrer Schleifringanordnungen können in jedem Fall unverändert weiterverwendet werden. Die mit der erfindungsgemäßen Anordnung durchführbaren Messungen können Antriebsmomente ebenso wie Bremsmomente betreffen.

Vorteilhafte Weiterbildungen der Erfindung sind Gegenstand der Unteransprüche.

Im folgenden werden zwei Ausführungsbeispiele der Erfindung mit weiteren Einzelheiten anhand je einer schematischen Zeichnung erläutert. Es zeigen:
- Fig. 1: einen axialen Halbschnitt durch eine Anordnung-für Drehmomentmessungen an einem Personenkraftwagen und
- Fig. 2: eine entsprechende Anordnung an einem Lastkraftwagen.

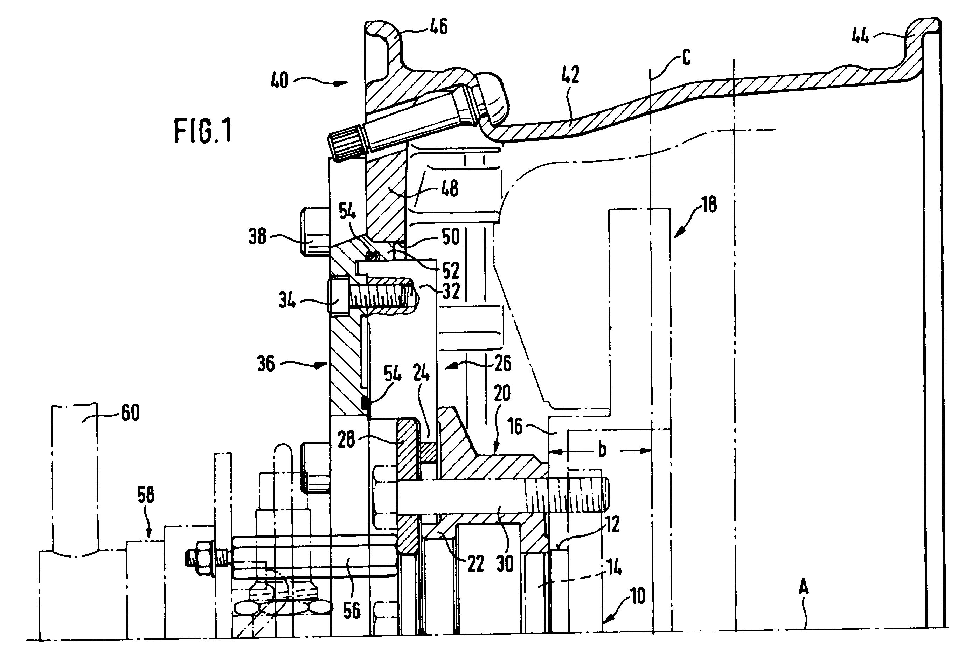

In Fig. 1 ist eine übliche Fahrzeugnabe 10 dargestellt, die einen axial inneren Zentrieransatz 12 und einen axial äußeren Zentrieransatz 14 aufweist, an denen ein radial innerer Flansch 16 einer Bremsscheibe 18 bzw. ein erster Adapter 20 zentriert sind. Der erste Adapter 20 hat an seinem von der Fahrzeugnabe 10 abgewandten Ende einen Zentrieransatz 22, der in einen flanschartigen, radial inneren Randbereich 24 einer handelsüblichen Meßnabe 26 eingreift, wodurch diese zentriert ist, also eine mit der Fahrzeugnabe 10 gemeinsame geometrische Achse A aufweist. Der radial innere Randbereich 24 der Meßnabe 26 ist zwischen einem Klemmring 28 und dem ersten Adapter 20 mittels eines ersten Satzes Schrauben 30 eingespannt. Die Schrauben 30 entsprechen in ihrer Anordnung den üblicherweise zur Befestigung eines Rades an der Fahrzeugnabe 10 verwendeten Schrauben, sind jedoch handelsübliche Maschinenschrauben von größerer Länge; sie erstrecken sich durch je ein Loch im Klemmring 28, je einen radial nach innen offenen Schlitz im inneren Randbereich 24 der Meßnabe 26 sowie durch je ein Loch im ersten Adapter 20 hindurch und sind in je eines der üblichen Befestigungslöcher der Fahrzeugnabe 10 eingeschraubt. Der erste Adapter 20 weist an seinen beiden Stirnseiten Ausdrehungen auf, so daß er die Meßnabe 26 und den radial inneren Flansch 16 der Bremsscheibe 18 nur in schmalen Ringzonen berührt, wodurch Wärmeübertragung durch Wärmeleitung von der Bremsscheibe auf die Meßnabe nur in geringem Maß stattfinden kann.

Die Meßnabe 26 hat einen in üblicher Weise mit Gewindebohrungen ausgestatteten radial äußeren Randbereich 32, an dem mittels eines zweiten Satzes Schrauben 34 ein zweiter Adapter 36 befestigt ist. An diesem ist mittels eines dritten Satzes Schrauben 38 ein Prüfrad 40 befestigt. Die Schrauben 34 und 38 sind ebenfalls handelsübliche Maschinenschrauben.

Das Prüfrad 40 hat eine Felge 42, die derjenigen eines üblichen Fahrzeugrades entspricht und axial innen sowie axial außen je ein Felgenhorn 44 bzw. 46 aufweist. Unmittelbar radial innerhalb des axial äußeren Felgenhorns 46 ist eine im wesentlichen ebene, kreisringförmige Radschüssel 48 angeordnet, deren Innendurchmesser erheblich größer als derjenige eines normalerweise an der Fahrzeugnabe 10 zu befestigenden Fahrzeugrades ist. Das Prüfrad 40 ist also derart gestaltet, daß es im Gegensatz zu dem Fahrzeugrad, an dessen Stelle es vorgesehen ist, nicht unmittelbar an der Fahrzeugnabe 10 befestigt werden kann. Dadurch wird radial innerhalb des Innenrandes 50 der Radschüssel 48 ein Freiraum zur Unterbringung der Meßnabe 26 gewonnen.

Der zweite Adapter 36 hat einen Zentrieransatz 52, mit dem er auf der zylindrischen äußeren Mantelfläche der Meßnabe 26 zentriert ist und seinerseits die Radschüssel 48 an deren Innenrand 50 zentriert. Gegen die äußere Mantelfläche sowie die von der Fahrzeugnabe 10 abgewandte Stirnfläche der Meßnabe 26 ist der zweite Adapter 36 durch je eine O-Ringdichtung 54 abgedichtet.

Die beiden Adapter 20 und 36 sind in ihren axialen Abmessungen derart an diejenigen der Meßnabe 26 und des Prüfrades 40 angepaßt, daß dessen Felge 42 dasselbe Mittenmaß aufweist, wie die entsprechende Felge eines normalerweise an der Fahrzeugnabe 10 zu befestigenden Fahrzeugrades. Das Mittenmaß b ist, wie üblich, als Abstand der Felgenmittelebene C von der axial äußeren Stirnfläche des Bremsscheibenflansches 16 definiert, an der sich der erste Adapter 20 abstützt.

Am ersten Adapter 20 sind mehrere zur Achse A parallele Stehbolzen 56 mit je einem Gewindeabschnitt befestigt, der sich durch je einen radial nach innen offenen Schlitz im Klemmring 28 hindurcherstreckt. An den Stehbolzen 56 ist ein sich mit dem Prüfrad 40 drehender Teil einer Schleifringanordnung 58 befestigt, deren nichtdrehender Teil an ein Meßkabel 60 angeschlossen ist.

Im allgemeinen genügt es im PKW-Bereich, wenn für sämtliche gängigen Fahrzeugtypen, an denen Antriebs- oder Bremsmomente gemessen werden sollen, Prüfräder 40 in insgesamt nur drei verschiedenen Felgengrößen bereitgehalten werden, nämlich beispielsweise 14''6J, 15''7J und 16''7J. Hierbei bedeutet die erste Zahl den Felgendurchmesser in Zoll, die zweite die Felgenbreite in Zoll und der Buchstabe J eine Felgenhornkennzeichnung.

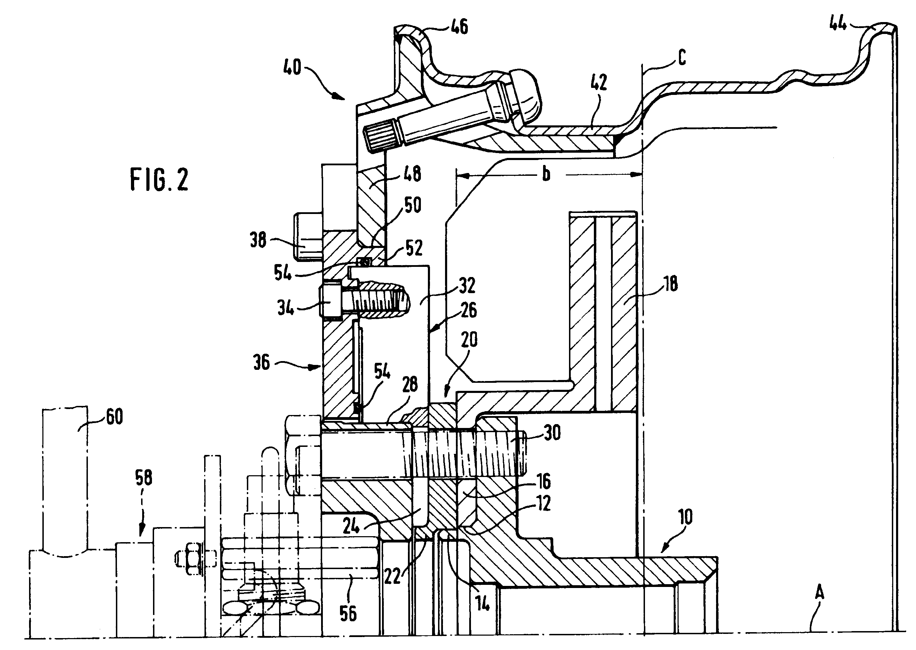

Die vorstehende Beschreibung der in Fig. 1 dargestellten, für einen PKW vorgesehenen Anordnung gilt auch für die in Fig. 2 dargestellte, für einen LKW vorgesehene Anordnung. Während jedoch das Prüfrad 40 gemäß Fig. 1 aus Aluminiumguß besteht, ist das Prüfrad 40 gemäß Fig. 2 aus einer handelsüblichen Felge 42 und einer angeschweißten Radschüssel 48 aus Stahl hergestellt. Der erste Adapter 20 ist gemäß Fig. 2 eine schmale Ringscheibe, deren Durchmesser an den im Vergleich zu Fig. 1 größeren Durchmesser der zu einem LKW gehörigen Fahrzeugnabe 10 angepaßt ist. Entsprechend der üblichen Anordnung der Gewindelöcher in der LKW-Fahrzeugnabe 10 sind die Schrauben 30 gemäß Fig. 2 in einem größeren Abstand von der Achse A angeordnet als in Fig. 1. Infolgedessen haben die Schrauben 30 radial innerhalb der Meßnabe 26 keinen Platz, so daß es gemäß Fig. 2 erforderlich ist, einen Klemmring 28 von größerer axialer Dicke zu verwenden als in Fig. 1. Die Meßnabe 26 sowie der zweite Adapter 36 haben in Fig. 2 jedoch die gleichen Abmessungen wie in Fig. 1. Dabei bleibt es auch, wenn in der einen oder anderen dargestellten Anordnung der erste Adapter 20 zur Anpassung an unterschiedliche Fahrzeugtypen durch einen ersten Adapter anderer axialer Abmessungen ersetzt wird.

## Patentansprüche

1. Anordnung für Drehmomentmessungen an Kraftfahrzeugen mit
- einer Meßnabe (26), die einen ersten und einen zweiten Randbereich (24, 32) aufweist,
- einem ersten Adapter (20), der am ersten Randbereich (24) der Meßnabe (26) befestigt ist und an einer Fahrzeugnabe (10) montiert ist, und
- einem zweiten Adapter (36), der am zweiten Randbereich (32) der Meßnabe (26) befestigt ist, und an dem eine Radschüssel (48) montiert ist,
wobei
- die Radschüssel (48) zu einem Prüfrad (40) gehört und einen Innendurchmesser hat, der größer als der Außendurchmesser der Fahrzeugnabe (10) ist,
- das Prüfrad (40) eine Felge (42) aufweist, die der Felge eines normalerweise an der Fahrzeugnabe (10) zu montierenden Fahrzeugrades entspricht,
- die Meßnabe (26) im wesentlichen radial innerhalb der Radschüssel (48) des Prüfrades (40) angeordnet ist, und
- die über die Meßnabe (26) und die beiden Adapter (20, 36) hergestellte Verbindung zwischen Fahrzeugnabe (10) und Prüfrad (40) in axialer Richtung so bemessen ist, daß die Felgenmittelebene (C) des Prüfrades (40) die gleiche Lage gegenüber der Fahrzeugnabe (10) hat wie die Felgenmittelebene des durch das Prüfrad (40) ersetzten Fahrzeugrades bei dessen unmittelbarer Befestigung an der Fahrzeugnabe (10)
der zweite Adapter (36) einen Zentrieransatz (52) aufweist, der die Meßnabe (26) radial außen umgreift und in die Radschüssel (48) des Prüfrades (40) zentrierend eingreift und
der zweite Adpater (36) gegen eine Stirnfläche und eine äußere Mantelfläche der Meßnabe (26) abgedichtet ist.

2. Anordnung nach Anspruch 1,
dadurch **gekennzeichnet**, daß
der erste Adapter (20) axial zwischen Fahrzeugnabe (10) und Meßnabe (26) angeordnet und gegen mindestens einen anderen, sich in seiner axialen Länge unterscheidenden ersten Adapter (20) austauschbar ist.

## Claims

1. An arrangement for measuring torque in motor vehicles, comprising
- a measuring hub (26) which includes first and second peripheral zones (24, 32),
- a first adapter (20) fastened to the first peripheral zone (24) and mounted on a vehicle hub (10), and
- a second adapter (36) which is fastened to the second peripheral zone (32) of the measuring hub (26) and on which a wheel body (48) is mounted,
wherein
- the wheel body (48) belongs to a test wheel (40) and has an inner diameter which is greater than the outer diameter of the vehicle hub (10),
- the test wheel (40) includes a rim (42) which corresponds to the rim of a vehicle wheel normally to be mounted on the vehicle hub (10),
- the measuring hub (26) is arranged essentially radially within the wheel body (48) of the test wheel (40), and
- the dimension in axial direction of the connection between the vehicle hub (10) and the test wheel (40) established through the measuring hub (26) and the two adapters (20, 36) is such that the centre plane (C ) of the rim of the test wheel (40) is in the same position with respect to the vehicle hub (10) as the centre plane of the rim of the vehicle wheel, replaced by the test wheel (40), when secured directly to the vehicle hub (10),
- the second adapter (36) has a centering extension (52) which radially surrounds the measuring hub (26) at the outside thereof and engages with centering action in the wheel body (48) of the test wheel (40), and
- the second adapter (36) is sealed with respect to a front surface and an outer circumferential surface of the measuring hub (26).

2. The arrangement as claimed in claim 1, characterized in that the first adapter (20) is disposed axially between the vehicle hub (10) and the measuring hub (26) and adapted to be replaced by at least one other first adapter (20) of different axial length.

## Revendications

1. Dispositif de mesure du couple moteur d'un véhicule automobile comprenant
- un moyeu de mesure (26) présentant une première et une seconde zone de bord (24, 32),
- un premier adaptateur (20) qui est fixé à la première zone de bord (24) du moyeu de mesure (26) et qui est destiné à être monté sur un moyeu de véhicule (10), et
- un second adaptateur (36) qui est fixé à la seconde zone de bord du moyeu de mesure (26) et sur lequel est destiné à être monté un voile de roue (48),
dans lequel
- le voile de roue (48) appartient à une roue d'essai (40) et présente un diamètre intérieur qui est supérieur au diamètre extérieur du moyeu de véhicule (10),
- la roue d'essai (40) présente une jante (42) qui correspond à la jante d'une roue de véhicule devant normalement être montée sur le moyeu du véhicule (10),
- le moyeu de mesure (26) est disposé sensiblement radialement à l'intérieur du voile de roue (48) de la roue d'essai (40), et
- la liaison entre le moyeu de véhicule (10) et la roue d'essai (40) réalisée par l'intermédiaire du moyeu de mesure (26) et des deux adaptateurs (20, 36) est dimensionnée en direction axiale de telle façon que le plan médian de la jante (C) de la roue d'essai (40) ait la même position par rapport au moyeu de véhicule (10) que le plan médian de la jante de la roue de véhicule remplacée par la roue d'essai (40) lorsque la roue de véhicule est fixée directement sur le moyeu de véhicule (10),
- le second adaptateur (36) présente un rebord de centrage (52) qui enveloppe radialement extérieurement le moyeu de mesure (26) et est en prise de centrage dans le voile de roue (48) de la roue d'essai (40) et
- le second adaptateur (36) est étanché contre une surface frontale et une surface latérale extérieure du moyeu de mesure (26).

2. Dispositif selon la revendication 1,
caractérisé en ce que
le premier adaptateur (20) est disposé axialement entre le moyeu de véhicule (10) et le moyeu de mesure (26) et peut être échangé contre au moins un autre premier adaptateur (20) de longueur axiale différente.
